Europäisches Patentamt

European Patent Office

Office européen des brevets

(11) Veröffentlichungsnummer: **0 009 701**
**B1**

(12) # EUROPÄISCHE PATENTSCHRIFT

(45) Veröffentlichungstag der Patentschrift:
06.01.82

(21) Anmeldenummer: **79103472.1**

(22) Anmeldetag: **17.09.79**

(51) Int. Cl.³: **C 07 C 148/00, C 10 M 1/38**

(54) Schwefelhaltige Umsetzungsprodukte, Verfahren zu ihrer Herstellung und Verwendung als Zusatz zu Schmiermitteln.

(30) Priorität: **28.09.78 DE 2842138**

(43) Veröffentlichungstag der Anmeldung:
**16.04.80 Patentblatt 80/8**

(45) Bekanntmachung des Hinweises auf die Patenterteilung:
**06.01.82 Patentblatt 82/1**

(84) Benannte Vertragsstaaten:
**BE DE FR GB IT NL SE**

(56) Entgegenhaltungen:
**DE-C-140 827**
**FR-A-2 176 679**
**US-A-3 850 825**

(73) Patentinhaber: **RHEIN-CHEMIE RHEINAU GMBH,**
**Postfach 81 04 09, D-6800 Mannheim 81 (DE)**

(72) Erfinder: **Kreutzer, Ingo, In den Seegärten 11,**
**D-6836 Oftersheim (DE)**
Erfinder: **Schüle, Wolfgang, Egerlandweg 5,**
**D-6834 Ketsch (DE)**
Erfinder: **Krüger, Wolfgang, Dr., Memelweg 5,**
**D-6830 Schwetzingen (DE)**
Erfinder: **Wilken, Ortrud, Stamitzstrasse 2,**
**D-6800 Mannheim (DE)**

(74) Vertreter: **Gremm, Joachim, Dr. et al, c/o Bayer AG,**
**Zentralbereich Patente Marken und Lizenzen,**
**D-5090 Leverkusen, Bayerwerk (DE)**

## Schwefelhaltige Umsetzungsprodukte
### Verfahren zu ihrer Herstellung und Verwendung als Zusatz zu Schmiermitteln

Die Erfindung betrifft ein schwefelhaltiges Umsetzungsprodukt aus a) Fetten, Ölen, Fettsäureestern einwertiger Alkohole und/oder olefinischen Kohlenwasserstoffen, b) einem partiellen Mono- oder Diester einer ungesättigten Fettsäure und c) Schwefel, dessen Herstellung durch Mischung und anschließender Umsetzung bei erhöhten Temperaturen sowie dessen Verwendung als Zusatz zu Schmiermitteln.

Nach der weitgehenden Ausrottung der Wale, die bisher mit dem aus ihnen gewonnenen Spermöl die Hauptlieferanten für schwefelbare fette Öle waren, werden jetzt immer mehr andere wertvolle Naturöle wie Rüböl, Sojaöl, Baumwollsaatöl, Leinöl usw., bzw. deren Fettsäure und Fettsäureester für die Herstellung von Schwefelträgern verwendet.

Fette mit einem erhöhten Anteil an gesättigten Fettsäuren, die für die Ernährung nicht so wertvoll sind, wie z. B. Talg und Schmalz, sind für die Herstellung von Schwefelträgern weniger geeignet, da die daraus hergestellten Schwefelträger bei Zimmertemperatur fest und vor allem in paraffinischen Ölen zu Kristallisation der ungesättigten und daher nicht geschwefelten Anteil an Triglyceriden neigen. Solche Schwefelträger sind technisch als Schmiermittelzusatz nur bedingt einsetzbar, da sie in der kalten ruhenden Maschine kristallisieren, und dabei zur Verstopfung von Schmierspalten und Ölleitungen neigen. Außerdem sind Schwefelträger, die aus solchen Fetten hergestellt werden, in ihrer Schmierwirksamkeit den Schwefelträgern aus Spermöl bzw. ungesättigteren Speiseölen unterlegen. Dies trifft für die Produkte gemäß der FR-PS 2 176 679 sowie der US-PS 3 850 825 zu. Wie dem folgenden Beispiel 1 sowie der Tabelle I entnommen werden kann, besteht Kristallisationsneigung sowie beeinträchtigte Wirksamkeit als Schmiermittelzusatz.

Ziel der Erfindung ist es, das Kälteverhalten und die Schmiereigenschaften von Schwefelträgern so zu verbessern, daß auch weniger wertvolle Fette eingesetzt werden können, um gleiche Eigenschaften zu erzielen. Darüber hinaus können auch die bisherigen Schwefelträger für besondere Anforderungen weiter verbessert werden.

Gegenstand der Erfindung ist ein schwefelhaltiges Umsetzungsprodukt, erhältlich durch Umsetzung in an sich bekannter Weise eines Gemisches aus

a) natürlichen Fetten und Ölen und/oder Fettsäureestern einwertiger Alkohole mit 1—30 C-Atomen in der Alkoholkomponente und/oder olefinischen Kohlenwasserstoffen mit 2—30 C-Atomen,

b) 0,5—50, bevorzugt 1—20 Gew.-% bezogen auf Komponente a) eines partiellen Mono- oder Diesters einer ungesättigten Fettsäure mit einem mehrwertigen Alkohol und

c) 8—25 Gew.-% Schwefel bezogen auf Komponenten a) und b)

Ein weiterer Gegenstand der Erfindung ist ein Herstellungsverfahren für das erfindungsgemäße Umsetzungsprodukt sowie seine Verwendung als Zusatz zu Schmiermitteln.

Für die Mischschwefelung geeignete natürliche Fette und Öle sind z. B. Rindertalg, Hammeltalg, Schweineschmalz, Mischfette z. B. aus Schlachtabfällen und Abdeckereien, Baumwollsaatöl, Rüböl, Sojaöl, Sonnenblumenöl, Erdnußöl, Leinöl, Lardöl, Spermöl, bevorzugt Rinder- und Hammeltalg, Schweineschmalz und/oder Mischfette.

Als Fettsäureester sind solche geeignet, die aus Fettsäuren der obigen Öle, verestert mit einwertigen Alkoholen mit 1—30 C-Atomen hergestellt wurden.

Bevorzugt sind folgende Fettsäuren geeignet:

Mischölfettsäure, Talgfettsäure, Rübölfettsäure, Ölsäure, Sojafettsäure, Leinölfettsäure oder deren Gemische.

Die geeigneten Alkoholkomponenten für die Fettsäureester sind:

Methanol, Äthanol, Propanol, Butanol, Pentanol, Hexanol, Heptanol, Octanol, Nonanol, Decanol, Undecanol, Dodecanol, Tridecanol, Tetradecanol, Pentadecanol, Hexadecanol, Heptadecanol, Octadecanol, Nonadecanol, Eikosanol, Heneikosanol, Dokosanol, Trikosanol, Tetrakosanol, Pentakosanol Hexakosanol, Heptakosanol, Octakosanol, Nonakosanol, Trikontanol sowie ihre Isomeren und Gemische, bevorzugt Methanol.

Geeignete olefinische Kohlenwasserstoffe sind solche mit 2—30 C-Atomen wie z. B. Äthylen, Propylen, Butylen, Penten, Hexen, Hepten, Octen, Nonen, Decen, Dodecen, Tridecen, Tetradecen, Pentadecen, Hexadecen, Heptadecen, Octadecen, Nonadecen, Heneikosen sowie ihre Isomere, Oligomere und Gemische daraus, bevorzugt Oligomere des Propylens und Butylens und n-Olefine mit 10—30 C-Atomen.

Als Partialester einer ungesättigten Fettsäure mit einem mehrwertigen Alkohol sind geeignet Mono- oder Diester der obengenannten Fettsäuren mit z. B. Glyceryn, Trimethylolpropan, Pentaeritrit, Pentite, Hexite wie z. B. Sorbit, Manit, Dulcit, oder Gemische daraus, bevorzugt Hexite.

Die Herstellung des erfindungsgemäßen schwefelhaltigen Umsetzungsproduktes erfolgt in an sich bekannter Weise, indem man die Komponenten a) und b) mit 8—25 Gew.-%, bevorzugt 10—20 Gew.-%, Schwefel mischt und dann unter Rühren auf 120—220°C, bevorzugt 150—200°C, erhitzt bei einem Druck von 1—50 bar. Bei dieser Temperatur wird die Mischung 1—10 Stunden gerührt und dann

bei 80—120°C 1—10 Stunden mit Luft oder Stickstoff ausgeblasen, um evtl. entstandenes $H_2S$ zu entfernen.

Die erfindungsgemäßen Umsetzungsprodukte eignen sich als Zusatz zu allen Schmiermitteln, von denen ein höheres Lasttragevermögen und eine bessere Schmierfähigkeit gefordert wird. Sie werden hier evtl. zusammen mit weiteren EP-Additiven, Korrosionsschutzadditiven, Emulgatoren, Demulgatoren, Dispergatoren, Entschäumern, Verdickungsmittel, Metalldesaktivatoren und/oder Antioxydantien eingesetzt. Dabei sind Konzentrationen von 0,5—20 Gew.-%, bevorzugt 1—10 Gew.-%, des Umsetzungsproduktes in entsprechenden Grundölen mit Viskositäten von 5—3000 cSt bei 50°C wie beispielsweise paraffinische, napthenische, aromatische oder gemischtbasische Mineralöle oder Syntheseöle wie Esteröle, Ätheröle, Alkylbenzole, hydrierte Olefinpolymere sowie deren Mischungen, geeignet.

Der Gegenstand der Erfindung wird durch folgende ausgewählte Beispiele näher erläutert:

## Beispiel 1
## (Vergleich)

20 Gew.-Teile Schweineschmalz und 20 Gew.-Teile Talgfettsäuremethylester werden mit 4,5 Gew.-Teilen Schwefel versetzt, drei Stunden bei 180°C gerührt, auf 100°C abgekühlt und 2 Stunden kräftig mit Luft ausgeblasen. Es wird ein dunkelbraunes, bei Zimmertemperatur teilweise auskristallisiertes Produkt erhalten, das 9,8 Gew.-% Schwefel enthält.

## Beispiel 2

20 Gew.-Teile Schweineschmalz, 20 Gew.-Teile Talgfettsäuremethylester und 2 Gew.-Teile Sorbitanmonooleat werden mit 4,5 Gew.-Teilen Schwefel versetzt und wie in Beispiel 1 beschrieben umgesetzt. Es wird ein dunkelbraunes, flüssiges Produkt erhalten, das nur noch zu einem geringen Anteil zur Kristallisation bei Zimmertemperatur neigt. Das Produkt enthält 10,1 Gew.-% Schwefel.

## Beispiel 3

Wie Beispiel 2, jedoch mit 8 Gew.-Teilen Sorbitanmonooleat und 5,5 Gew.-Teilen Schwefel umgesetzt. Man erhält ein dunkelbraunes, flüssiges Produkt mit 10,0 Gew.-% Schwefel.

## Beispiel 4

60 Gew.-Teile Schweineschmalz, 25,5 Gew.-Teile Rübölfettsäure, 17,4 Gew.-Teile Isodecanol und 0,5 Teile Paratoluolsulfonsäure werden 4 Stunden bei 180°C verestert, dann 2,5 Gew.-Teile Sorbitanmonooleat und 11,5 Gew.-Teile Schwefel zugesetzt und weitere 3 Stunden gerührt. Danach wird bei 100°C zwei Stunden mit Luft ausgeblasen. Es wird ein dunkelbraunes Öl mit 9,7 Gew.-% Schwefel erhalten.

## Beispiel 5

45 Gew.-Teile Schweineschmalz, 15 Gew.-Teile Rüböl, 25 Gew.-Teile Rübölfettsäure, 17,4 Gew.-Teile Isodecanol, 0,5 Gew.-Teile Paratoluolsulfonsäure werden 4 Stunden bei 180°C verestert, dann 2,5 Gew.-Teile Sorbitanmonooleat und 11,5 Gew.-Teile Schwefel zugegeben und weitere 3 Stunden bei 180°C gerührt. Danach wird bei 100°C 2 Stunden mit Luft ausgeblasen. Es wird ein dunkelbraunes Öl mit 9,5 Gew.-% Schwefel erhalten.

## Beispiel 6
## (Vergleich)

80 Gew.-Teile des Produktes aus Beispiel 1 und 20 Teile Sorbitanmonooleat wurden gemischt.

Die Schmiereigenschaften wurden im Fallex-Prüfgerät (beschrieben in der ASTM D 2670) und dem Almen-Wieland-Ölprüfgerät (beschrieben in Mineralöle und verwandte Produkte, Carl Zerbe, Teil 2, Seite 155, Springer-Verlag 1969) geprüft.

Hierbei wird die Tragfähigkeit eines Schmierfilms bestimmt, wobei eine relative Aussage über die Schmierwirksamkeit des Öles bzw. der verwendeten Additive möglich ist. Weiterhin wurde der Trübungspunkt und der Stockpunkt der Öllösungen bestimmt.

3

Tabelle I

| Beispiel | Abriß des Schmierfilms im Fallex 10 Gew.-% Schwefelträger in gemischtbasischem Spindelöl 16 cSt bei 50°C | Lasttragevermögen Almen-Wieland 5 Gew.-% Schwefelträger in gemischtbasischem Spindelöl 16 cSt bei 50°C (2 Messungen) |
|---|---|---|
| 1 | 3000 libs | 750 kg/ 850 kg |
| 2 | — | 1650 kg/1650 kg |
| 3 | 3750 libs | 1650 kg/1650 kg |
| 6 | — | 750 kg/ 850 kg |

Tabelle II

| Beispiel | Trübungspunkt 2 Gew.-% Schwefelträger in Spindelöl | Stockpunkt 1 Gew.-% Schwefelträger in Spindelöl |
|---|---|---|
| 1 | −8°C | −25°C |
| 2 | −14°C | — |
| 3 | — | −30°C |
| 6 | — | −21°C |

Aus den Prüfungsergebnissen ist ersichtlich, daß die Schmierfähigkeit eines Öles enthaltend das erfindungsgemäße Umsetzungsprodukt besser ist (Beispiel 2+3) als ein herkömmliches Produkt (Beispiel 1), da der Schmierfilm wesentlich höhere Lasten trägt. Die Lasten können durch bloßes Zumischen von Sorbtanmonooleat (Beispiel 6) nicht erreicht werden. Die gleiche Relation wird auch bei den Trübungspunkten und Stockpunkten der Öllösungen gefunden.

**Patentansprüche**

1. Schwefelhaltiges Umsetzungsprodukt erhältlich durch Umsetzung von naürlichen Fetten und Ölen und/oder Fettsäureestern einwertiger Alkohol und/oder olefinischen Kohlenwasserstoffen mit Schwefel, dadurch gekennzeichnet, daß man ein Gemisch aus

a) natürlichen Fetten und Ölen und/oder Fettsäureestern einwertiger Alkohole mit 1—30 C-Atomen in der Alkoholkomponente und/oder olefinischen Kohlenwasserstoffen mit 2—30 C-Atomen,
b) 0,05—50 Gew.-% bezogen auf Komponente a) eines partiellen Mono- oder Diesters einer ungesättigten Fettsäure mit einem mehrwertigen Alkohol und
c) 8—25 Gew.-% Schwefel bezogen auf Komponenten a) und b)

miteinander umsetzt.

2. Umsetzungsprodukt gemäß Anspruch 1, dadurch gekennzeichnet, daß bei der Herstellung natürliche Fette und Öle, Talge oder Schweineschmalz eingesetzt werden.

3. Umsetzungsprodukt nach Anspruch 1, dadurch gekennzeichnet, daß bei der Herstellung als Fettsäureester entsprechende Methylester eingesetzt werden.

4. Umsetzungsprodukt nach Anspruch 1, dadurch gekennzeichnet, daß bei der Herstellung als Partialester Sorbitanmonooleat eingesetzt werden.

5. Verfahren zur Herstellung des schwefelhaltigen Umsetzungsproduktes gemäß Anspruch 1—4, dadurch gekennzeichnet, daß man die Mischung mit 8—25 Gew.-% Schwefel bei Temperaturen von 120—220°C unter einen Druck von 1—50 bar in an sich bekannter Weise umsetzt.

6. Verwendung des schwefelhaltigen Umsetzungsproduktes gemäß Anspruch 1—4, als Zusatz zu Schmiermitteln.

## Claims

1. Sulphur-containing reaction product obtainable by reacting natural fats and oils and/or fatty acid esters of monohydric alcohols and/or olefinic hydrocarbons with sulphur, characterised in that a mixture of

a) natural fats and oils and/or fatty acid esters of monohydric alcohols with 1−30 C atoms in the alcohol component and/or olefinic hydrocarbons with 2−30 C atoms,
b) 0.05−50% by weight, based on component a), of a partial mono- or di-ester of an unsaturated fatty acid and a polyhydric alcohol and
c) 8−25% by weight of sulphur, based on components a) and b)

are reacted with one another.

2. Reaction product according to Claim 1, characterised in that in the preparation of it natural fats and oils, tallows or lard are used.

3. Reaction product according to Claim 1, characterised in that in the preparation of it the fatty acid esters used are appropriate methyl esters.

4. Reaction product according to Claim 1, characterised in that in the preparation of it sorbitan monooleate is used as the partial ester.

5. Process for the preparation of the sulphur-containing reaction product according to Claims 1 to 4, characterised in that the mixture is reacted with 8−25% by weight of sulphur at temperatures of 120−220° C and under a pressure of 1−50 bars in a manner known per se.

6. Use of the sulphur-containing reaction product according to Claims 1 to 4 as an additive for lubricants.


## Revendications

1. Produit de réaction soufré obtenu par réaction de graines et huiles naturelles et/ou d'esters d'acides gras de monoalcools et/ou d'hydrocarbures oléfiniques avec du soufre, caractérisé en ce que l'on fait réagir ensemble un mélange de

a) des graisses et huiles naturelles et/ou esters d'acides gras de monoalcools en $C_1−C_{30}$ et/ou hydrocarbures oléfiniques en $C_2−C_{30}$,
b) 0,5−50% en poids, de préférence 1−20% en poids par rapport au composant a), d'un mono ou diester partiel d'un acide gras insaturé avec un polyalcool, et
c) 8−25% en poids de soufre par rapport aux composants a) et b).

2. Produit de réaction selon la revendication 1, caractérisé en ce que l'on utilise dans la préparation des graines et huiles naturelles, des suifs ou du saindoux de porc.

3. Produit de réaction selon la revendication 1, caractérisé en ce que l'on utilise, comme esters d'acides gras dans la préparation, les esters méthyliques correspondants.

4. Produit de réaction selon la revendication 1, caractérisé en ce que l'on utilise comme ester partiel dans la préparation le monooléate de sorbitanne.

5. Procédé pour la préparation du produit de réaction soufré selon la revendication 1−4, caractérisé en ce que l'on fait réagir le mélange de manière connue avec 8−25% en poids de soufre à une température de 120−220° C sous une pression de 1−50 bars.

6. Utilisation du produit de réaction selon la revendication 1−4 comme additif aux lubrifiants.